# EUROPÄISCHE PATENTSCHRIFT

(11) **EP 2 014 932 B1**
(45) Veröffentlichungstag und Bekanntmachung des Hinweises auf die Patenterteilung: **06.11.2013**
(21) Anmeldenummer: 08104701.1
(22) Anmeldetag: 10.07.2008
(51) Int. Cl.: F16B 31/04

(54) **Verfahren zum Verbinden oder Befestigen von Bauteilen unter Verwendung einer hochfest vorspannbaren Schraubverbindung sowie Schraubengarnitur für hochfest vorspannbare Verbindungen**
Device for connecting or attaching components using an extremely secure pretensioning screw connection and screw set for extremely secure pretensable connections
Procédé destiné au raccordement ou à la fixation de composants en utilisant un raccordement de vis très résistant pouvant être prétendu et raccordement de vis pour raccordements très résistant pouvant être prétendus

(30) Priorität: 13.07.2007 DE 102007033179
(43) Veröffentlichungstag der Anmeldung: 14.01.2009
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Christophersen, Ulrich Rudolf

(56) Entgegenhaltungen:
- FR-A1- 2 871 231
- GB-A- 1 166 907
- GB-A- 1 235 143
- US-A- 4 020 720
- "VERBUS KONSTRUKTIONSTEILE., ANNOUNCEMENT", VERBUS, XX, XX, 1 January 1985 (1985-01-01), pages 1-12, XP000319460,

## Beschreibung

Die Erfindung betrifft ein Verfahren zum Verbinden und Befestigen zweier Flansche nach Patentanspruch 1, und eine Anordnung aus einer Schraubengarnitur und einem hydraulischem Schraubenspannzylinder nach Patentanspruch 5.

Neben den Grundformen von Schraubenverbindungen sind auch verschiedene Sonderformen genormt. Hierzu zählen die hochfest vorzuspannenden Verbindungen, kurz HV-Verbindungen. Diese machen heute einen Großteil der Verbindungen im Stahlhochbau aus. Ihr vorwiegender Einsatzbereich ist die Befestigung und Verbindung von Bauteilen mit vorwiegend ruhender Beanspruchung. Bei nicht vorwiegend ruhender, d.h. bei dynamischer Beanspruchung, besteht die Forderung, die HV-Verschraubungen vorzuspannen. Die Kraftübertragung erfolgt bei dieser Art der Verbindung durch Reibung zwischen den beteiligten Berührungsflächen der Bauteile. Das Vorspannen von HV-Schraubengarnituren kann durch ein Drehmoment-Vorspannverfahren, ein Drehimpuls-Vorspannverfahren oder ein Drehwinkel-Vorspannverfahren erfolgen. Auch Kombinationen dieser Verfahren werden eingesetzt. Dabei ist beim Anziehen der Mutter ein Mitdrehen der Schraube relativ zum Bauteil bzw. den Bauteilen zu vermeiden.

Eine Vorrichtung zum axialen Vorspannen einer aus Schraube und Mutter bestehenden Schraubengarnitur ist aus der FR 2 871 231 bekannt. Die Vorrichtung ist als ein hydraulischer Schraubenspannzylinder ausgebildet und setzt sich im Wesentlichen aus einem Basisteil, einem Spannwerkzeug und einem integrierten Antriebsrad zusammen. Das Basisteil ist, die Mutter der Schraubengarnitur übergreifend, auf einem der zu verbindenden bzw. zu befestigenden Bauteile abgestützt. Das hydraulisch betätigte Spannwerkzeug greift axial formschlüssig in jenen Gewindeabschnitt der Schraube ein, welcher nach außen über die Mutter vorsteht. Das in den Schraubenspannzylinder integrierte Antriebsrad schließlich dient, während der Spanndruck aufgebracht wird, dem Drehen der dann weitgehend entlasteten Mutter.

Aus der GB 1,166,907 ist eine aus einer Schraube und einer Mutter bestehende Schraubengarnitur zum gegenseitigen Verspannen zweier Flansche bekannt, wobei der Schraubenkopf dergestalt mit einer verbreiterten Aufstandsfläche versehen ist, dass deren Durchmesser größer ist, als das Eckmaß des Mehrkants, mit dem der Schraubenkopf versehen ist. Der Schaft der Schraube zeigt einen Durchmesser, welcher geringer als der Gewindeaußendurchmesser der Schraube ist. Auch an der Mutter ist ein radial vergrößerter Aufstandsbereich ausgebildet, womit insgesamt eine gleichmäßigere Lastverteilung auf die zu verbindenden bzw. zu befestigenden Teile erzielt werden soll. Das Spannen der Schraubengarnitur erfolgt in üblicher Weise mittels handelsüblicher Schraubenschlüssel unter Aufbringen des erforderlichen Anzugsmoments.

Aus der Firmenveröffentlichung "VERBUS Konstruktionsteile" vom Januar 1985 des Herstellers Bauer & Schaurte Karcher GmbH sind für hohe wechselnde Belastungen und ein verbessertes Elastizitätsverhalten Dehnschrauben und Dünnschaftschrauben bekannt. Bei den Dehnschaftschrauben ist der Schaftdurchmesser kleiner als der Gewindekerndurchmesser. Bei den Dünnschaftschrauben ist der Schaftdurchmesser kleiner als der Gewindewalzdurchmesser.

Die **Aufgabe** der Erfindung ist es, unter Verwendung einer hochfest vorspannbaren Schraubverbindung zu einer Verbindung bzw. Befestigung von Bauteilen zu gelangen, die eine dosierte Vorspannung der Schraubverbindung ermöglicht.

Zur **Lösung** dieser Aufgabe wird ein Verfahren mit den Merkmalen des Anspruchs 1 und eine Anordnung aus einer Schraubengarnitur und einem hydraulischen Schraubenspannzylinder mit den Merkmalen des Anspruchs 5 vorgeschlagen.

Damit werden technische Lösungen angegeben, die sich für den Einsatz ziehender Spannverfahren und damit in besonderer Weise auch für den Einsatz bei der Befestigung oder Verbindung dynamisch belasteter Bauteile eignen, etwa im Rahmen von Stahlkonstruktionen. Die vorgeschlagene Schraubengarnitur ermöglicht eine genau dosierbare Vorspannung. Die außen über die Mutter überstehende Gewindeabschnittslänge der Schraube ist mindestens gleich dem 0,5-fachen des Gewindeaußendurchmessers der Schraube. Eine solche Gewindeabschnittslänge bietet genügend Traglänge für den Einsatz eines ausschließlich ziehend arbeitenden Vorspannverfahrens. Ein derartiges Verfahren in Verbindung mit einer Gewindespannvorrichtung ist zum Beispiel aus der DE 10 2005 015 922 A1 bekannt.

Von Vorteil ist, dass es infolge des verkleinerten Schaftdurchmessers der Schraube zu einer verbesserten Spannungsverteilung über der Länge der Schraube bzw. des Schraubenbolzens kommt. Ferner ergibt sich ein günstigeres Klemmlängenverhältnis.

Im Rahmen des angegebenen Verfahrens werden die Schraube und die Mutter dergestalt angeordnet, dass bei mittelbar oder unmittelbar gegenüber dem Bauteil abgestützter Mutter eine außen über die Mutter überstehende Gewindeabschnittslänge der Schraube von mindestens dem 0,5-fachen des Gewindeaußendurchmessers der Schraube verbleibt. Vorzugsweise beträgt die über die Mutter überstehende Gewindeabschnittslänge der Schraube mindestens gleich dem 0,6-fachen des Gewindeaußendurchmessers, oder sie ist gleich dem Gewindeaußendurchmesser oder länger als der Gewindeaußendurchmesser.

Mittels eines in Längsrichtung formschlüssig in die über die Mutter überstehenden Gewindegänge eingreifenden Spannwerkzeuges eines hydraulischen Schraubenspannzylinders erfolgt das Spannen der Schraube, wobei deren im Durchmesser reduzierter Schaftabschnitt eine Längung erfährt. Daher sind das Verfahren und die Anordnung aus Schraubengarnitur und hydraulischem Schraubenspannzylinder gekennzeichnet durch Aufsetzen eines Schraubenspannzylinders, welcher ein Basisteil und das zu dem Basisteil unter Hydraulikdruck längsbewegliche Spannwerkzeug aufweist, derart, dass das Basisteil, die Mutter übergreifend, mittelbar gegenüber dem zu verbindenden oder zu befestigenden Bauteil abgestützt wird. Letzteres wird durch die Verwendung einer Unterlegscheibe erreicht, deren Durchmesser größer als der größte Durchmesser der Mutter ist, wodurch auf der Außenseite der Unterlegscheibe genügend Platz für ein sicheres Aufsitzen des hydraulischen Schraubenspannzylinders vorhanden ist.

Eine weitere Ausgestaltung sieht vor, dass der Schraubenkopf einen Mehrkantabschnitt und einen runden Abschnitt aufweist. In diesem Fall ist im Bereich des Schraubenkopfes die Verwendung einer zusätzlichen Unterlegscheibe entbehrlich.

Im Folgenden werden Ausführungsbeispiele unter Bezugnahme auf die Zeichnungen erläutert. Darin zeigen:
- Fig. 1: in perspektivischer Darstellung eine Flanschverbindung mit mehreren vorgespannten Schraubengarnituren;
- Fig. 2: eine weitere perspektivischer Darstellung der Flanschverbindung;
- Fig. 3: einen Längsschnitt durch eine aus einer Schraube und einer Mutter ohne Unterlegscheibe zusammengesetzte Schraubengarnitur für hochfest vorspannbare Verbindungen;
- Fig. 4: einen Längsschnitt durch die hochfest vorspannbare Verbindung nach Fig. 3 einschließlich eines an die Schraube angesetzten Schraubenspannzylinders;
- Fig. 5: in einer erfindungsgemäßen Ausführungsform einen Längsschnitt durch eine aus einer Schraube und einer Mutter mit Unterlegscheibe zusammengesetzte Schraubengarnitur für hochfest vorspannbare Verbindungen;
- Fig. 6: die Verbindung nach Fig. 5 einschließlich eines an die Schraube angesetzten Schraubenspannzylinders und
- Fig. 7: in einer weiteren erfindungsgemäßen Ausführungsform eine Schraubengarnitur für hochfest vorspannbare Verbindungen einschließlich eines an die Schraube angesetzten Schraubenspannzylinders.

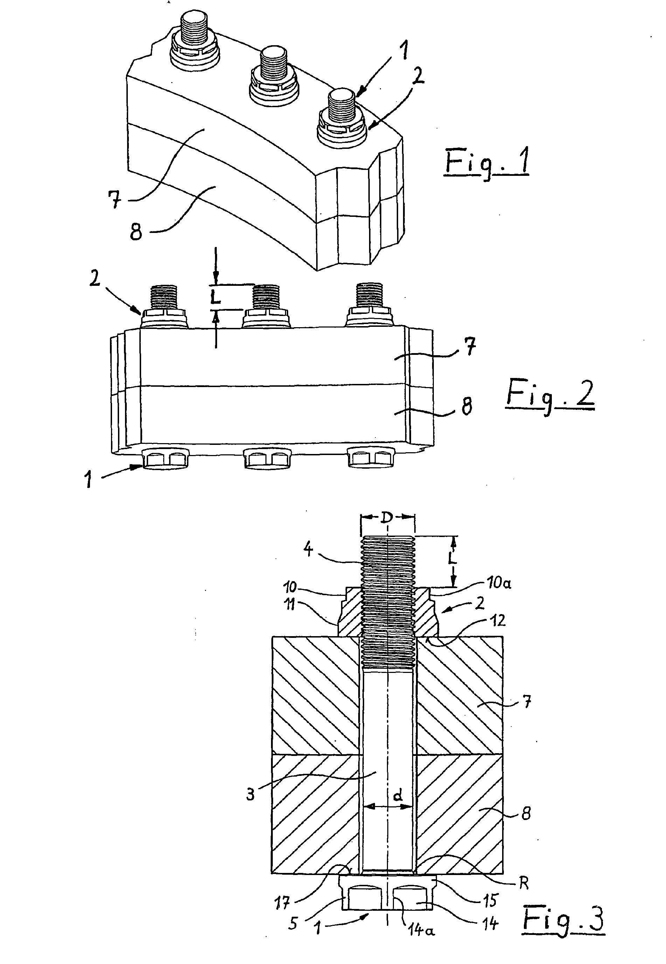

Die Schraubengarnitur für hochfest vorspannbare Befestigungen und Verbindungen, hier für eine Verbindung von zwei Flanschen 7, 8, setzt sich aus einer Schraube oder einem Schraubenbolzen 1 und einer darauf aufschraubbaren Mutter 2 zusammen. Unterlegscheiben unter Mutter und Schraube sind bei der Ausführungsform nach den Fign. 1 bis 4 nicht vorhanden. Durch das Fehlen von Unterlegscheiben fallen entsprechende Trennfugen weg, wodurch die Verschraubung nur sehr geringe Setzungserscheinungen zeigt. Dadurch wiederum tritt ein geringerer Vorspannkraftverlust ein. Durch das vollständige Fehlen von Unterlegscheiben kann es ferner auch nicht zu einer Falschmontage derartiger Scheiben durch seitenverkehrtes Aufsetzen kommen.

Gemäß Fig. 3 verfügt die Schraube 1 neben ihrem Schraubenkopf 5 über einen langen, im Durchmesser reduzierten Schaftabschnitt 3 sowie einen ebenfalls verlängerten Gewindeabschnitt 4, auf den die Mutter 2 aufschraubbar ist. Die Länge des glattflächigen und daher kerbwirkungsarmen Schaftabschnittes 3 ist dergestalt, dass sich dieser mit seiner ganzen oder jedenfalls einem wesentlichen Teil seiner Länge innerhalb der zu verspannenden Bauteile 7, 8 der Stahlkonstruktion befindet. Der Durchmesser d der Schraube auf dem Schaftabschnitt 3 ist reduziert und ist bei dem dargestellten Ausführungsbeispiel im Wesentlichen gleich dem Rolldurchmesser des Gewindes. Der Schaftdurchmesser d kann aber auch geringer sein, als der Rolldurchmesser des Gewindes. Insbesondere kann er gleich oder geringer sein, als der Gewinde-Flankendurchmesser. Auf diese Weise ist der Schaftdurchmesser d geringer als bei einer Standardschraube des hochfest vorspannbaren Typs, wodurch der Schaftabschnitt 3 beim axialen hydraulischen Vorspannen der Schraube eine Längung erfährt. Ferner ergibt sich ein im Vergleich günstigeres Klemmlängenverhältnis.

Die Mutter der in den Fign. 1 bis 4 dargestellten Schraubengarnitur setzt sich, axial aufeinander folgend, aus einem runden, nach außen hin sich etwas verjüngenden Abschnitt 11 und einem Mehrkantabschnitt 10 zusammen. Diese Bereiche sind einstückig an der Mutter 2 ausgebildet. Der runde Abschnitt 11 ist an seiner unmittelbar auf dem Bauteil 7 aufsitzenden Unterseite mit einer ebenen, d.h. flachen Ringfläche 12 versehen. Der Außenradius der Ringfläche 12 ist gleich oder größer, als das Eckmaß des Mehrkants 10a der Mutter. Insbesondere ist der Außenradius der Ringfläche 12 gleich dem Außenradius einer entsprechenden, d.h. für dieselbe Gewindegröße vorgesehenen Standard-Unterlegscheibe gemäß der deutschen Industrienorm DIN 6916.

Auch der Schraubenkopf 5 weist axial aufeinander folgend einen Mehrkantabschnitt 14 und einen runden, zylindrischen Abschnitt 15 auf. Der zylindrische Abschnitt 15 weist an seiner gegen das Bauteil 8 anliegenden Unterseite eine flache Ringfläche 17 auf, deren Außenradius gleich oder größer ist, als das Eckmaß des Mehrkants 14a der Schraube. Auch in diesem Fall ist die Geometrie vorteilhafterweise dergestalt, dass der Außenradius der ebenen Ringfläche 17 gleich ist dem entsprechenden Außenradius einer Standard-Unterlegscheibe für hochfeste und vorspannbare Stahlbauverschraubungen nach der deutschen Industrienorm DIN 6916.

Die Ringfläche 17 an der Unterseite des Schraubenkopfes 5 geht über eine Viertelkreisrundung mit Radius R unmittelbar in den verschlankten Schaftabschnitt 3 über. In diesem Übergangsbereich zwischen Ringfläche und Schaftabschnitt befindet sich daher insbesondere keine Stufe oder Absatz, um Kerbspannungen gering zu halten.

Die Schraube der Schraubengarnitur weist in ihrem Gewindeabschnitt 4 eine Überlänge auf, um auf diese Weise einen hinreichend langen, freien Gewindeabschnitt zum Ansatz eines direkt an dem Gewinde ansetzenden, d.h. ziehenden Spannverfahrens zur Verfügung zu haben. Für eine ausreichende Traglänge während des Ziehens der Schraube beträgt die außen über den Mehrkantbereich 10 der Mutter überstehende Gewindeabschnittslänge L der Schraube mindestens das 0,5-fache des Gewindeaußendurchmessers D der Schraube. Vorteilhafter ist ein mindestens 0,6 -faches Überstehen. Besonders bevorzugt wird, dass die überstehende Gewindeabschnittslänge L gleich oder größer dem Maß des Gewindeaußendurchmessers D ist.

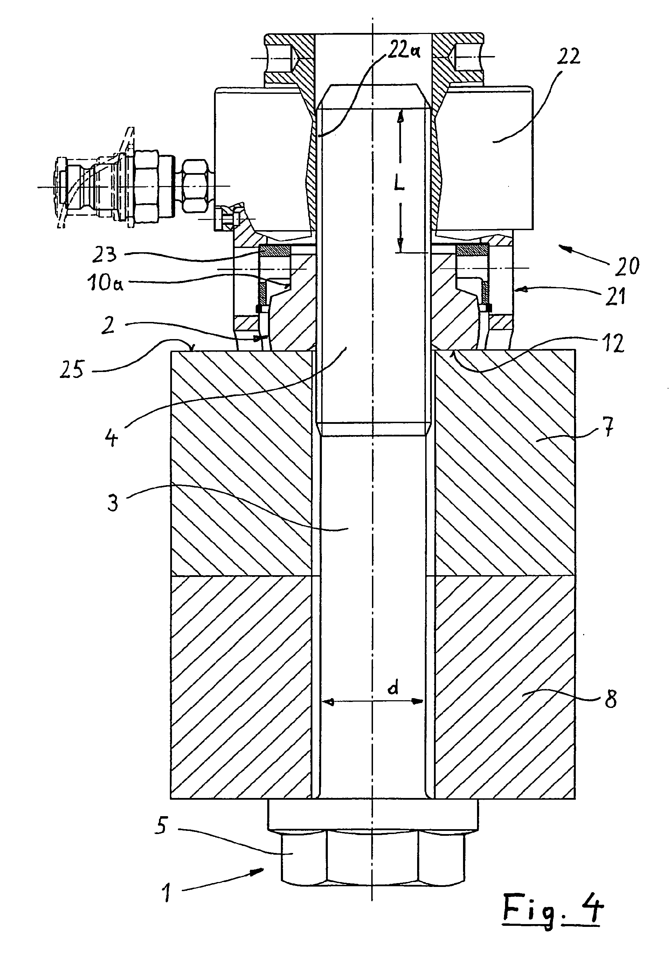

In Fig. 4 ist das Verfahren zum axialen Spannen der in den Figuren 1 bis 3 dargestellten Schraubengarnitur illustriert. Auf das zu verbindende oder zu befestigende Bauteil 7 wird zunächst ein hydraulisch betätigbarer Schraubenspannzylinder 20 aufgesetzt. Dessen die Mutter 2 umgebendes Basisteil 21 stützt sich, ebenso wie die Mutter 2, unmittelbar an der flach und eben gestalteten Außenseite 25 des zu befestigenden Bauteils 7 ab. Mittels der Hydraulik längsbeweglich zu dem Basisteil 21 ist das Spannwerkzeug 22 des Schraubenspannzylinders 20 angeordnet. Bestandteil des Spannwerkzeugs 22 ist ein Innengewinde 22a, welches axial formschlüssig in die Gewindegänge des Gewindeabschnitts 4 eingreift. Durch Einleiten hydraulischen Drucks in den Schraubenspannzylinder 20 hebt dessen Spannwerkzeug 22 an und entwickelt eine ausschließlich axiale Zugkraft auf das Schraubenende. Dies führt zu einer Längung der Schraube 2, wobei wegen des reduzierten Durchmessers vor allem der glattflächige Schaftabschnitt 3 der Schraube eine Längung erfährt. Zugleich oder anschließend wird die hierbei entlastete Mutter 2 durch Verdrehen im Aufschraubsinne nachgeführt. Für dieses Verdrehen reicht ein geringes Antriebsmoment aus, wozu in dem Schraubenspannzylinder 20 ein entsprechendes, an den Mehrkant 10a der Mutter 2 angepasstes Antriebsrad 23 integriert ist.

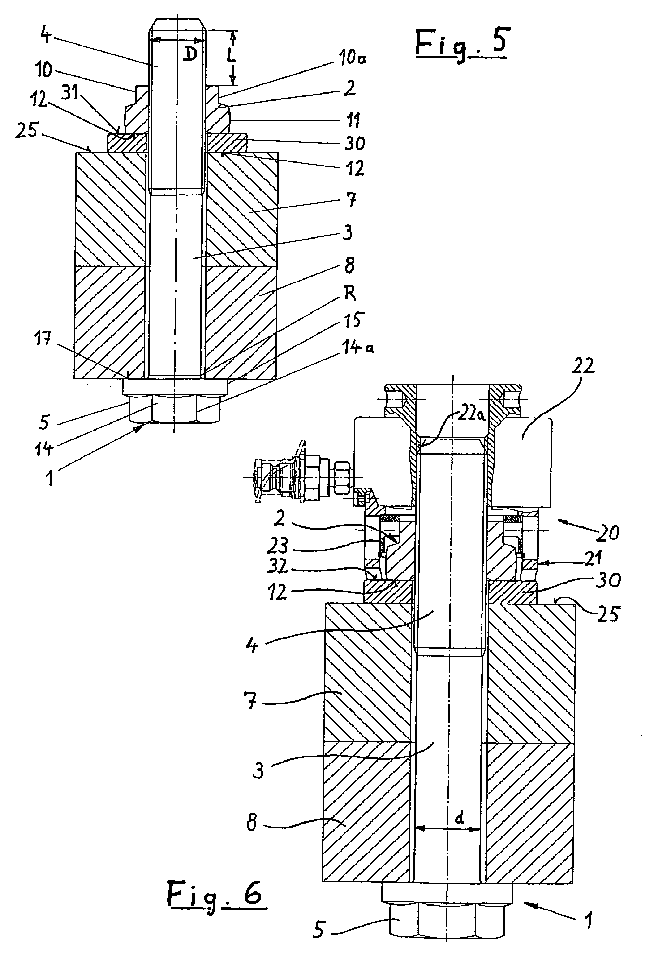

Die Figuren 5 und 6 zeigen eine erfindungsgemäße Ausführungsform der Schraubengarnitur. Bei dieser Ausführungsform stützt sich die Mutter 2 mit ihrer Ringfläche 12 nicht unmittelbar auf der Außenseite 25 des zu verschraubenden Bauteils 7 ab, sondern zwischen Mutter 2 und Außenseite 25 befindet sich eine Unterlegscheibe 30, die Bestandteil der Schraubengarnitur ist. Die Unterlegscheibe 30 ist auf beiden Seiten flach und weist einen Durchmesser auf, der deutlich größer als der größte Durchmesser der Mutter 2 ist. Beispielsweise beträgt der Durchmesser der Unterlegscheibe 30 das 1,5-fache des größten Durchmessers der Mutter 2. Die Unterlegscheibe 30 ist auf Innen- und Außenseite 31 gleich gestaltet, so dass sie nicht seitenvertauscht montiert werden kann.

Im Übrigen ist die Schraubengarnitur nach Fig. 5 wie jene nach Fig. 3 aufgebaut. Insbesondere setzt sich die Mutter 2 aus den bereits beschriebenen Längsabschnitten mit einem zylindrischen Bereich 11 und einem Mehrkantbereich 10 mit Mehrkanten 10a zusammen. Ferner führt die Anordnung von Schraube und Mutter zu einer über die Mutter 2 überstehenden Gewindeabschnittslänge L der Schraube, die hier gleich ist dem Gewindeaußendurchmesser D der Schraube 1. Übereinstimmend mit der bereits beschriebenen Ausführungsform weist die Schraube 1 wiederum einen glatten Schaftabschnitt 3 mit reduziertem Durchmesser auf.

Bei Einsatz der Schraubengarnitur nach Fig. 5 stützt sich, wie Fig. 6 erkennen lässt, der hydraulische Schraubenspannzylinder 20 nicht auf der Außenseite 25 des Bauteils 7 ab, sondern auf derselben ebenen Außenseite 31 der Unterlegscheibe 30, auf der sich auch die Mutter 2 mit ihrer Ringfläche 12 abstützt. Während des Vorspannens der Schraube bildet die Unterlegscheibe 30 daher einen feststehenden, sich nicht drehenden Abstützort für die ringförmige Aufstandsfläche 32 des Schraubenspannzylinders. Von daher ist bevorzugt, dass der Außendurchmesser der Unterlegscheibe 30 in etwa gleich ist dem Durchmesser der Aufstandsfläche des Basisteils 21.

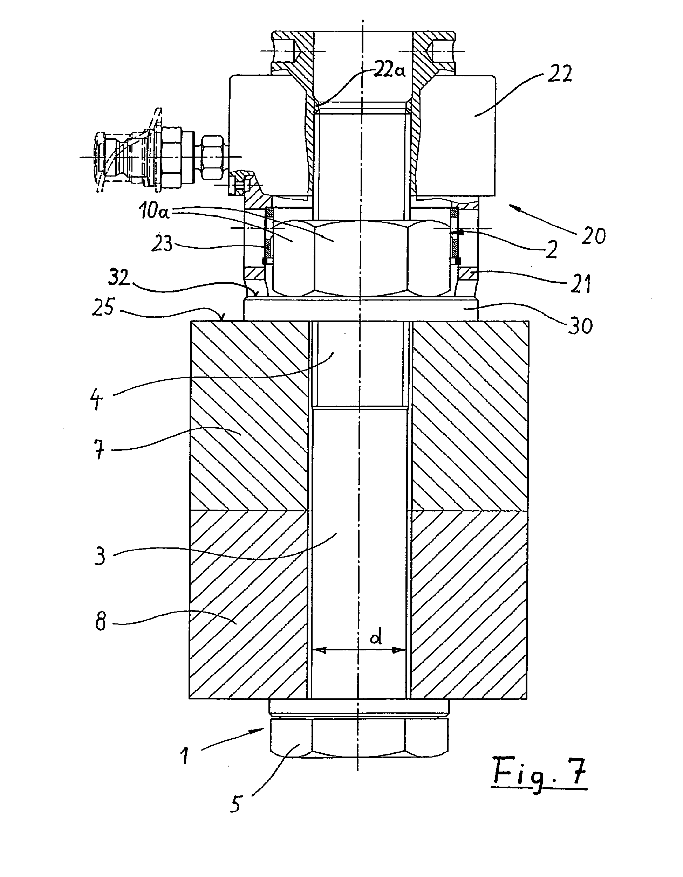

Bei der erfindungsgemäßen Ausführungsform nach Fig. 7 ist, abweichend zu den voranstehend beschriebenen Ausführungsformen, die Mutter 2 eine handelsübliche, genormte Mutter für HV-Verbindungen. Diese stützt sich wiederum nicht unmittelbar auf dem Bauteil 7 ab, sondern über die dazwischen angeordnete Unterlegscheibe 30, wobei sich auf letzterer wiederum das Basisteil 21 des hydraulischen Schraubenspannzylinders 20 beim Vorspannen der Schraube abzustützen vermag. Auch die Schraube 1 ist bei der Ausführungsform nach Fig. 7 eine Standardschraube für HV-Schraubverbindungen.

Der Durchmesser der Unterlegscheibe 30 ist deutlich größer als der Durchmesser einer HV-Unterlegscheibe gemäß deutscher Industrienorm DIN 6916, und zwar um ein solches Maß größer, dass genügend Aufstandsfläche für den Schraubenspannzylinder zur Verfügung steht. Vorzugsweise sind beide Flachseiten der Unterlegscheibe 30 von hoher Oberflächengüte, um Setzungserscheinungen zu minimieren. Zur Reduzierung der Setzung trägt auch bei, dass sich der Schraubenspannzylinder unmittelbar auf der vergrößerten Unterlegscheibe abstützt und so bereits während des Vorspannens der Kontakt zwischen Unterlegscheibe 30 und Außenseite 25 des Bauteils 7 verbessert wird mit der Folge einer geringeren Setzung. Setzungserscheinungen zwischen der Außenseite 31 der Unterlegscheibe 30 und der Ringfläche 12 der Mutter 2 fallen dann gering aus, wenn es sich in beiden Fällen um bearbeitete und damit entsprechend präzise Flächen handelt.

### Bezugszeichenliste

- 1: Schraube
- 2: Mutter
- 3: Schaftabschnitt
- 4: Gewindeabschnitt
- 5: Schraubenkopf
- 7: Bauteil
- 8: Bauteil
- 10: Mehrkantbereich
- 10a: Mehrkant
- 11: zylindrischer Bereich
- 12: Ringfläche
- 14: Mehrkantbereich
- 14a: Mehrkant
- 15: zylindrischer Bereich
- 17: Ringfläche
- 20: Schraubenspannzylinder
- 21: Basisteil
- 22: Spannwerkzeug
- 22a: Innengewinde
- 23: Antriebsrad
- 25: Außenseite

- 30: Unterlegscheibe
- 31: Außenseite
- 32: ringförmige Abstützfläche

- d: Flankendurchmesser
- D: Gewindeaußendurchmesser
- L: Gewindeabschnittslänge
- R: Radius

## Patentansprüche

1. Verfahren zum Verbinden oder Befestigen zweier Flansche (7, 8) unter Verwendung einer hochfest vorspannbaren Schraubverbindung, durch Verdrehen einer Mutter (2) der Schraubverbindung gegenüber einer Schraube (1), welche aufeinander folgend einen gegen den einen Flansch (8) anliegenden Kopf-, einen Schaft- und einen die Mutter tragenden Gewindeabschnitt aufweist, wobei der Schaftdurchmesser (d) in dem Schaftabschnitt (3) gleich oder geringer als der Rolldurchmesser ist,
Anordnen der Schraube (1) und der Mutter (2) dergestalt, dass bei mittelbar oder unmittelbar gegenüber dem anderen Flansch (7) abgestützter Mutter (2) eine außen über die Mutter (2) überstehende Gewindeabschnittslänge (L) der Schraube (1) von mindestens gleich dem 0,5-fachen des Gewindeaußendurchmessers (D) der Schraube verbleibt,
Aufsetzen eines Schraubenspannzylinders (20), welcher ein Basisteil (21) und ein zu dem Basisteil längsbewegliches Spannwerkzeug (22) aufweist, derart, dass sich das Basisteil (21), die Mutter (2) übergreifend, mittelbar gegenüber dem anderen Flansch (7) abstützt, wobei sich das Basisteil (21) ausschließlich auf einer zwischen dem Flansch (7) und der Mutter (2) angeordneten Unterlegscheibe (30) abstützt, deren Durchmesser größer als der größte Durchmesser der Mutter (2) ist und Aufstandsfläche für den Schraubenspannzylinder (20) bietet,
mittels des axial formschlüssig in den über die Mutter (2) überstehenden Gewindeabschnitt eingreifenden Spannwerkzeuges (22) Spannen der Schraube (1) unter Längung von deren Schaftabschnitt (3) und unter gleichzeitigem und/oder anschließendem Verdrehen der Mutter (2).

2. Verfahren nach Anspruch 1, **gekennzeichnet durch** Anordnen der Schraube und der Mutter dergestalt, dass die über die Mutter überstehende Gewindeabschnittslänge (L) der Schraube (1) mindestens gleich dem 0,6-fachen des Gewindeaußendurchmessers (D) der Schraube ist, vorzugsweise mindestens gleich dem Gewindeaußendurchmesser (D).

3. Verfahren nach einem der vorangehenden Ansprüche, **gekennzeichnet durch** Verwendung einer Mutter (2), welche einen Mehrkantabschnitt (10) und einen runden Abschnitt (11) aufweist, wobei der runde Abschnitt (11) an seiner Unterseite eine ebene Ringfläche (12) aufweist, deren Außenradius gleich oder größer ist als das Eckmaß des Mehrkants (10a).

4. Verfahren nach einem der Ansprüche 1 oder 2, **gekennzeichnet durch** Verwendung einer Mutter, die eine genormte HV-Mutter ist.

5. Anordnung aus einer Schraubengarnitur (1, 2) und einem hydraulischen Schraubenspannzylinder (20) zum axialen Spannen der Schraubengarnitur (1, 2), wobei die Schraubengarnitur (1, 2) zur Erzielung einer hochfest vorspannbaren Verbindung aufweist:
- eine Schraube (1) mit aufeinanderfolgend einem gegen einen Flansch (8) anliegenden Kopf-, einem Schaft- und einem Gewindeabschnitt,
- eine von dem Gewindeabschnitt (4) getragene Mutter (2) mit einem Mehrkant,
- eine zwischen einem anderen Flansch (7) und der Mutter (2) angeordnete Unterlegscheibe (30),
wobei der Schraubenspannzylinder (20) aufweist:
- ein Basisteil (21), welches, die Mutter (2) übergreifend, mittelbar gegenüber dem anderen Flansch (7) abgestützt ist und sich ausschließlich auf der Unterlegscheibe (30) abstützt, deren Durchmesser größer als der größte Durchmesser der Mutter (2) ist und Aufstandsfläche für den Schraubenspannzylinder bietet;
- ein mittels Hydraulik zu dem Basisteil (21) längsbewegliches Spannwerkzeug (22), welches axial formschlüssig in den über die Mutter (2) überstehenden Gewindeabschnitt der Schraube (1) unter Längung von deren Schaftabschnitt (3) eingreift,
- ein in den Schraubenspannzylinder integriertes Antriebsrad (23), welches zum Verdrehen der Mutter (2) an deren Mehrkant angepasst ist,
wobei der Schaftdurchmesser (d) in dem Schaftabschnitt (3) gleich oder geringer als der Rolldurchmesser ist,
wobei bei mittelbar gegenüber dem anderen Flansch (7) abgestützter Mutter (2) die außen über die Mutter (2) überstehende Gewindeabschnittslänge (L) der Schraube (1) mindestens gleich dem 0,5-fachen des Gewindeaußendurchmessers (D) der Schraube (1) ist.

## Claims

1. A method of connecting or fastening two flanges (7, 8) whilst using a bolt fastening capable of being pre-stressed with high strength, by rotating a nut (2) of the bolt fastening with respect to a bolt (1) which has in succession a head portion resting against one flange (8), a shank portion and a thread portion carrying the nut, wherein the shank diameter (d) in the shank portion (3) is equal to or less than the roll diameter,
arranging the bolt (1) and the nut (2) in such a way that when the nut (2) is supported indirectly or directly with respect to the other flange (7) a length (L) of the thread portion of the bolt (1) projecting outwards beyond the nut (2) remains from at least equal to 0·5 times the external diameter (D) of the thread of the bolt,
applying a bolt-tensioning cylinder (20) which has a main part (21) and a tensioning tool (22) capable of being moved longitudinally with respect to the main part, in such a way that the main part (21) engaging over the nut (2) is indirectly supported with respect to the other flange (7), wherein the main part (21) is supported exclusively on a washer (30) which is arranged between the flange (7) and the nut (2) and the diameter of which is larger than the largest diameter of the nut (2) and provides a support face for the bolt-tensioning cylinder (20),
tensioning the bolt (1) by means of the tensioning tool (22) engaging in an axially positively locking manner in the thread portion projecting beyond the nut (2) and whilst lengthening the shank portion (3) of the said bolt and whilst rotating the nut (2) simultaneously and/or subsequently.

2. A method according to Claim 1, **characterized by** arranging the bolt and the nut in such a way that the length (L) of the thread portion of the bolt (1) projecting beyond the nut is at least equal to 0·6 times the external diameter (D) of the thread of the bolt, preferably at least equal to the external diameter (D) of the thread.

3. A method according to one of the preceding Claims, **characterized by** the use of a nut (2) which has a polygonal portion (10) and a round portion (11), wherein the round portion (11) has on the underside thereof a flat annular face (12), the external radius of which is equal to or larger than the width-across of the polygon (10a).

4. A method according to one of Claims 1 or 2, **characterized by** the use of a nut which is a standardized high-strength pre-stressing nut.

5. An arrangement of a bolt fitting (1, 2) and an hydraulic bolt-tensioning cylinder (20) for the axial stressing of the bolt fitting (1, 2), wherein in order to achieve a fastening capable of being pre-stressed with high strength the bolt fitting (1, 2) has:
- a bolt (1) with in succession a head portion resting against a flange (8), a shank portion and a thread portion,
- a nut (2) carried by the thread portion (4) and having a polygon,
- a washer (30) arranged between another flange (7) and the nut (2),
wherein the bolt-tensioning cylinder (20) has:
- a main part (21) which engaging over the nut (2) is indirectly supported with respect to the other flange (7) and is supported exclusively on the washer (30), the diameter of which is larger than the largest diameter of the nut (2) and provides a support face for the bolt-tensioning cylinder,
- a tensioning tool (22) which is capable of being moved longitudinally with respect to the main part (21) by means of hydraulics and which engages in an axially positively locking manner in the thread portion of the bolt (1) projecting beyond the nut (2) and whilst lengthening the shank portion (3) of the said bolt,
- a drive wheel (23) which is integrated in the bolt-tensioning cylinder and which is
adapted to the polygon of the nut (2) for the rotation of the latter,
wherein the shank diameter (d) in the shank portion (3) is equal to or less than the roll diameter,
wherein when the nut (2) is supported indirectly with respect to the other flange (7) the length (L) of the thread portion of the bolt (1) projecting outwards beyond the nut (2) is at least equal to 0·5 times the external diameter (D) of the thread of the bolt (1).

## Revendications

1. Procédé destiné au raccordement ou à la fixation de deux brides (7, 8) en utilisant un raccordement de vis pouvant être prétendu de façon très résistante, par rotation d'un écrou (2) du raccordement de vis par rapport à une vis (1) qui présente, de façon successive, un tronçon de tête adjacent à une bride (8) parmi les brides, un tronçon de tige et un tronçon de filet portant l'écrou, le diamètre de tige (d) dans le tronçon de tige (3) étant égal ou inférieur au diamètre de roulement,
agencement de la vis (1) et de l'écrou (2) de telle sorte que, quand l'écrou (2) est en appui indirectement ou directement vis-à-vis de l'autre bride (7), il demeure une longueur de tronçon de filet (L) de la vis (1) qui dépasse extérieurement de l'écrou (2) et qui est au moins égale à 0,5 fois le diamètre extérieur de filet (D) de la vis, placement d'un vérin tendeur de vis (20) qui présente une partie de base (21) et un outil de serrage (22) mobile longitudinalement par rapport à la partie de base de telle sorte que la partie de base (21), enjambant l'écrou (2), s'appuie indirectement vis-à-vis de la bride (7), la partie de base (21) s'appuyant exclusivement sur une rondelle (30) qui est disposée entre la bride (7) et l'écrou (2) et dont le diamètre est plus grand que le plus grand diamètre de l'écrou (2) et offre une surface de pose pour le vérin tendeur de vis (20),
au moyen de l'outil de serrage (22) engrenant axialement par liaison de forme dans le tronçon de filet dépassant de l'écrou (2), serrage de la vis (1) avec allongement de son tronçon de tige (3) et avec rotation simultanée ou ultérieure de l'écrou (2).

2. Procédé selon la revendication 1, **caractérisé par** l'agencement de la vis et de l'écrou de telle sorte que la longueur de tronçon de filet (L) de la vis (1) dépassant de l'écrou est au moins égale à 0,6 fois le diamètre extérieur de filet (D) de la vis, de préférence au moins égal au diamètre extérieur de filet (D).

3. Procédé selon une des revendications précédentes, **caractérisé par** l'utilisation d'un écrou (2) qui présente un tronçon polygonal (10) et un tronçon rond (11), le tronçon rond (11) présentant au niveau de son côté inférieur une surface annulaire (12) plane dont le rayon extérieur est égal ou supérieur à la cote angulaire du polygone (10a).

4. Procédé selon une des revendications 1 ou 2, **caractérisé par** l'utilisation d'un écrou qui est un écrou HV normalisé.

5. Agencement constitué d'un ensemble de vis (1, 2) et d'un vérin tendeur de vis (20) hydraulique pour le serrage axial de l'ensemble de vis (1, 2), l'ensemble de vis (1, 2) présentant, pour l'obtention d'un raccordement pouvant être prétendu de façon très résistante,
- une vis (1) avec, de façon successive, un tronçon de tête adjacent à une bride (8), un tronçon de tige et un tronçon de filet,
- un écrou (2) porté par le tronçon de filet (4), avec un polygone,
- une rondelle (30) disposée entre une autre bride (7) et l'écrou (2), le vérin tendeur de vis (20) présentant :
- une partie de base (21) qui, enjambant l'écrou (2), est appuyée indirectement vis-à-vis de l'autre bride (7) et s'appuie exclusivement sur la rondelle (30) dont le diamètre est plus grand que le plus grand diamètre de l'écrou (2) et qui offre une surface de pose pour le vérin tendeur de vis,
- un outil de serrage (22) qui est mobile longitudinalement par rapport à la partie de base (21) au moyen d'un dispositif hydraulique et qui engrène axialement par liaison de forme dans le tronçon de filet de la vis (1) dépassant de l'écrou (2), avec allongement de son tronçon de tige (3),
- une roue d'entraînement (23) qui est intégrée dans le vérin tendeur de vis et qui est adaptée pour faire tourner l'écrou (2) sur son polygone,
le diamètre de tige (d) dans le tronçon de tige (3) étant égal ou inférieur au diamètre de roulement
la longueur de tronçon de filet (L) de la vis (1) dépassant extérieurement de l'écrou (2), quand l'écrou (2) est appuyé indirectement vis-à-vis de l'autre bride (7), étant égale à 0,5 fois le diamètre extérieur de filet (D) de la vis (1).
